# EUROPEAN PATENT APPLICATION

(11) **EP 2 045 975 A1**
(43) Date of publication of application: **08.04.2009**
(21) Application number: 07791110.5
(22) Date of filing: 20.07.2007
(51) Int. Cl.: H04L 12/56, H04M 3/00

(54) **COMMUNICATION CONTROL METHOD AND COMMUNICATION CONTROL APPARATUS**

(30) Priority: 20.07.2006 JP 2006198487
(71) Applicant: NTT DoCoMo, Inc., Chiyoda-ku Tokyo 100-6150 (JP)
(72) Inventor: TANABE, Akimichi, 11-1,Nagatacho 2-chome Chiyoda-ku Tokyo 100-6150 (JP); KOZU, Kazuyuki, 11-1,Nagatacho 2-chome Chiyoda-ku Tokyo 100 -6150 (JP); YABUSAKI, Masami, 11-1,Nagatacho 2-chome Chiyoda-ku Tokyo 100-6150 (JP)
(74) Representative: HOFFMANN EITLE
(86) International application number: PCT/JP2007/064373
(87) International publication number: WO 2008/010580

(57) **Abstract**

In a communication system which performs a communication of the user communication information between a user terminal 10a and a user terminal 10b, the communication system including a plurality of network domains each having different types of destination information (for example, host address) of the user communication information transmitted from the user terminal 10a to the user terminal 10b, a communication control method that switches a U-PLANE includes: allocating, to the communication path of the user communication information, path identification information identifying the communication path of the user communication information; notifying, to the user terminal 10b, the path identification information; and transmitting, from the user terminal 10b, the user communication information, by using the path identification information as the destination information.

## Description

### TECHNICAL FIELD

The present invention relates to a communication control method and a communication control apparatus, which are employed in a communication system that communicates, between one user terminal and other user terminal, user communication information, and that includes a plurality of network domain having different destination information of the user communication information transmitted from the one user terminal to the other user terminal.

### BACKGROUND ART

There has been conventionally known a communication system which uses the SIP (Session Initiation Protocol) to enable user terminals to communicate user communication information (such as voice) therebetween.

Meanwhile, there has been a proposal of an application (Voice Call Continuity Application, which will be hereinafter referred to as a VCC application) that enables the communication of the user communication information (such as voice) to be continuously performed even when the domain to which a user terminal is connected is switched between a CS (Circuit Switched) domain and an IMS (IP Multimedia Subsystem) domain (for example, see 3GPP TS23.206 V0.5.1 "Voice Call Continuity between CS and IMS").

Specifically, when the domain to which the user terminal is connected is switched, the VCC application switches a control plane path which is a path for control information used for call control and the like. On the other hand, a user plane path which is a path for user communication information such as voice is switched by a plurality of user terminals currently performing communications on an end-to-end basis.

For example, when one user terminal is connected to the CS domain, destination information of the user communication information transmitted to the one user terminal from the other user terminal is information identifying a MGW (Media Gateway) performing control of a bearer that transmits the user communication information (the information is for example an IP address of the MGW). On the other hand, when the one user terminal is connected to the IMS domain, the destination information of the user communication information transmitted from the other user terminal to the one user terminal is information identifying the one user terminal (the information is for example an IP address of the one user terminal).

As described above, the destinations of the user communication information transmitted from the other user terminal to the one user terminal differ among network domains.

For this reason, when the network domain to which the one user terminal is connected is switched from the CS domain to the IMS domain for example, the other user terminal needs to be notified of the destination information of the user communication information for the IMS domain (information identifying the one user terminal).

On the other hand, when the network domain to which the one user terminal is connected is switched from the IMS domain to the CS domain, the other user terminal needs to be notified of the destination information of the user communication information for the CS domain (information identifying the MGW).

Here, when the other user terminal is located overseas for example, a long time is required for notifying, to the other user terminal, the destination information of the user communication information in each of the network domains. As a result, time for switching the network domain to which the one user terminal connect becomes long. Accordingly, the communication of the user communication information may be interrupted or disconnected.

Moreover, the destination information of the user communication information transmitted to the one user terminal is notified to the other user terminal. Accordingly, the location of the one user terminal is recognized by the other user terminal. This invades the "Location Privacy."

### SUMMARY OF THE INVENTION

An aspect of the present invention is summarized as, in a communication system which performs a communication of the user communication information between one user terminal (user terminal 10a) and other user terminal (user terminal 10b) and which includes a plurality of network domains each having different types of destination information (for example, host address) of the user communication information transmitted from the other user terminal to the one user terminal, the communication control method that switches the communication path of the user communication information including: allocating, to the communication path of the user communication information, path identification information (routing address) identifying the communication path (U-PLANE) of the user communication information; notifying, to the other user terminal, the path identification information; and transmitting, from the other user terminal, the user communication information, by using the path identification information as the destination information.

According to this aspect, the communication path information for identifying the user communication information is allocated to the communication path of the user communication information, and the other user terminal uses the routing address as destination information to transmit user communication information. Therefore, even when the network domain to which the one user terminal is connected is switched, it is no longer necessary to notify the other user terminal of a host address used as the destination information in the network domain to which the one user terminal is to be connected. Therefore, the time taken to switch the network domain to which the one user terminal is connected can be reduced, and the "Location Privacy" can be ensured.

In other words, a host address of the one user terminal does not need to be notified to the other user terminal, and thereby the other user terminal is not involved in the control of switching the network domain to which the one user terminal is connected. Accordingly, the time taken to switch the network domain to which the one user terminal is connected can be reduced, and the "Location Privacy" can be ensured.

An aspect of the present invention is summarized as the communication control method further including: associating the path identification information (routing address) with first destination information (WLAN host address or CS host address), when the one user terminal is connected to first network domain (WLAN domain 100 or CS domain 200), the first destination information being the destination information used in the first network domain; determining, based on a type of the user communication information, whether the destination information needs to be changed, when the user communication information using the path identification information as the destination information is received from the other user terminal; and transmitting the user communication information after changing the destination information from the path identification information to the first destination information, when the destination information is determined to be changed.

An aspect of the present invention is summarized as the communication control method further including: associating the path identification information (routing address) with second destination information (CS host address or WLAN host address) being the destination information used in the second network domain, when the network domain to which the one user terminal is connected is switched from the first network domain to an second network domain (WLAN domain 100 or CS domain 200), the second destination information being the destination information used in the second network domain; and transmitting the user communication information after changing the destination information from the path identification information to the second destination information, when the destination information is determined to be changed.

An aspect of the present invention is summarized as the communication control method further including: receiving a switching instruction requesting to switch the communication path of the user communication information, wherein whether the destination information needs to be changed is determined when the switching instruction is received.

An aspect of the present invention is summarized as a communication control apparatus (IASA 50) provided on a communication path (U-PLANE) of user communication information, in a communication system which performs a communication of the user communication information between one user terminal (user terminal 10a) and other user terminal (user terminal 10b), the communication system including a plurality of network domains each having different types of destination information of the user communication information transmitted from the other user terminal to the one user terminal. The communication control apparatus includes: an identification information allocation unit (address allocation unit 52) configured to allocate, to the communication path of the user communication information, path identification information (routing address) identifying the communication path of the user communication information; and a notification unit (communication unit 51) configured to notify, to the other user terminal, the path identification information allocated by the identification information allocation unit, wherein the path identification information is used as the destination information, when the other user terminal transmits the user communication information.

An aspect of the present invention is summarized as the communication control apparatus further including: a storage unit (storage unit 53) configured to store the path identification information (routing address) and first destination information (WLAN host address or CS host address) in association with each other, when the one user terminal is connected to first network domain (WLAN domain 100 or CS domain 200), the first destination information being the destination information used in the first network domain; a determination unit (U-PLANE switching unit 55) configured to determine, based on a type of the user communication information, whether the destination information needs to be changed, when the user communication information using the path identification information as the destination information is received from the other user terminal; and a transmitting unit (communication unit 51) configured to change the destination information from the path identification information to the first destination information, when the destination information is determined to be changed, and to transmit the user communication information.

An aspect of the present invention is summarized as the storage unit stores the path identification information (CS host address or WLAN host address) and second destination information in association with each other, when the network domain (CS domain 200 or WLAN domain 100) to which the one user terminal is connected is switched from the first network domain to an second network domain, the second destination information being the destination information used in the second network domain; and the transmitting unit changes the destination information from the path identification information to the first destination information, when the destination information is determined to be changed, and transmits the user communication information.

An aspect of the present invention is summarized as the communication control apparatus further including a receiving unit (communication unit 51) configured to receive a switching instruction requesting to switch the communication path of the user communication information, wherein whether the destination information needs to be changed is determined when the switching instruction is received.

### BRIEF DESCRIPTION OF THE DRAWINGS

[Fig. 1] Fig. 1 is a schematic diagram showing the configuration of a communication system according to an embodiment of the present invention.
[Fig. 2] Fig. 2 is a block diagram showing the configuration of a user terminal 10 according to the embodiment of the present invention.
[Fig. 3] Fig. 3 is a block diagram showing the configuration of an IASA 50 according to the embodiment of the present invention.

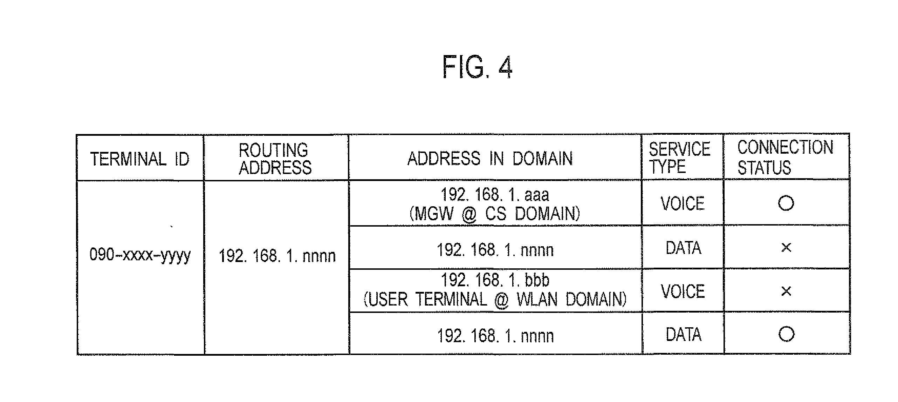

[Fig. 4] Fig. 4 is a diagram showing information stored in a storage unit 53 according to the embodiment of the present invention.
[Fig. 5] Fig. 5 is a sequence diagram showing an operation of the communication system according to the embodiment of the present invention.
[Fig. 6] Fig. 6 is a sequence diagram showing the operation of the communication system according to the embodiment of the present invention.
[Fig. 7] Fig. 7 is a sequence diagram showing the operation of the communication system according to the embodiment of the present invention.
[Fig. 8] Fig. 8 is a sequence diagram showing the operation of the communication system according to the embodiment of the present invention.
[Fig. 9] Fig. 9 is a sequence diagram showing the operation of the communication system according to the embodiment of the present invention.
[Fig. 10] Fig. 10 is a sequence diagram showing the operation of the communication system according to the embodiment of the present invention.

### BEST MODES FOR CARRYING OUT THE INVENTION

Next, embodiments of the present invention will be described. Note that, throughout the description of the drawings below, identical or similar parts are denoted by identical or similar reference numerals. It should be noted, however, that the drawings are schematic, and that the dimensional proportions and others are different from their actual values.

### (Configuration of Communication System)

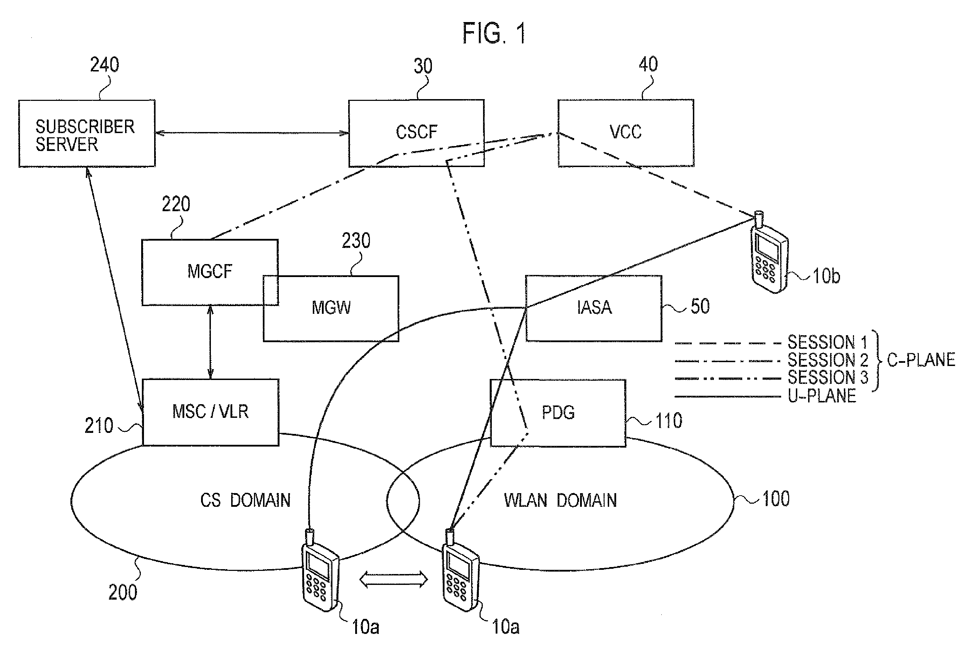

With reference to the drawing, a description will be given below of the configuration of a communication system according to an embodiment of the present invention. Fig. 1 is a schematic diagram showing the configuration of the communication system according to the embodiment of the present invention. Note that Fig. 1 shows, as one example, a case where a user terminal 10b transmits control information and/or user communication information to a user terminal 10a. In addition, it should be noted that Fig. 1 only focuses upon the configuration of a network to which the user terminal 10a is connected.

As shown in Fig. 1, the user terminal 10a is connectable to a WLAN domain 100 or a CS domain 200. Further, a path (C-PLANE) used to transmit and receive control information between the user terminal 10a and the user terminal 10b is switched according to the network domain to which the user terminal 10a is connected. Likewise, a path (U-PLANE) used to transmit and receive user communication information (for example, voice information and data information) between the user terminal 10a and the user terminal 10b is switched according to the network domain to which the user terminal 10a is connected.

It should be noted that, since the user terminals 10a and 10 b have the same configurations, the user terminal 10a and the user terminal 10b are collectively called as a user terminal 10, unless otherwise noted. The user terminal 10 will be described in detail later.

The WLAN domain 100 is referred to as a wireless LAN domain standardized by IEEE 802.11 or the like, and includes an access point (not shown) for performing radio communication with the user terminal 10a. In the WLAN domain 100, identification information for identifying the user terminal 10a (for example, an IP address of the user terminal 10a) is used as destination information of user communication information transmitted from the user terminal 10b.

A PDG 110 is an apparatus (Packet Data Gateway) that controls a C-PLANE and a U-PLANE when the user terminal 10a is connected to the WLAN domain 100. Specifically, the PDG 110 controls a session 3 between the user terminal 10a and a VCC 40 (described later). Further, the PDG 110 transmits user communication information transmitted from the user terminal 10b to the user terminal 10a.

The CS domain 200 is a circuit switched (CS) domain, and includes a base station (not shown) for performing radio communication with the user terminal 10a, a RNC (Radio Network Controller, not shown) controlling the base station, and the like. In the CS domain 200, identification information for identifying an MGW 230 (for example, an IP address of the MGW 230) is used as the destination information of user communication information transmitted from the user terminal 10b.

Here, the destination information used in each network domain is called as a host address. The destination information used in each network domain is different; a host address used in the WLAN domain 100 is called as a WLAN host address, whereas a host address used in the CS domain 200 is called as a CS host address.

An MSC/VLR 210 is an apparatus including both an MSC (mobile switching controller) and a VLR (visitor location register). Here, the MSC controls the RNC (not shown) and performs a circuit switching. The VLR temporality controls information of the user terminal 10a, such as subscriber information, location information, and authentication information.

An MGCF 220 is an apparatus having a function of controlling the C-PLANE (Media Gateway Control Function) when the user terminal 10a is connected to the CS domain 200. Specifically, the MGCF 220 controls a session 2 between the MGCF 220 and the VCC 40 (to be described later).

The MGW 230 is an apparatus (Media Gateway) having a function of performing switching among communication modes such as STM (Synchronous Transport Mode), ATM (Asynchronous Transport Mode), and IP (Internet Protocol). Specifically, the MGW 230 is provided on the U-PLANE and performs, for example, Codec mode conversion of voice information, and QoS (quality of service) control.

A subscriber server 240 is a server (for example, HLR; Home Location Register, or HSS; Home Subscriber Server) that manages information on the user terminal 10a, such as subscriber information, location information, and authentication information. Further, the subscriber server 240 is a server (for example, AAA; Authentication Authorization Accounting server) that performs authentication of the user terminal 10a based on the subscriber information of the user terminal 10a when the user terminal 10a is to start a session with the user terminal 10b.

A CSCF 30 is an apparatus having a function (Call State Control Function) of controlling a status of call control that is performed between the user terminal 10a and the user terminal 10b. For example, when the SIP (session initiation protocol) is employed, the CSCF 30 functions as an SIP server in which an IP address (SIP address) and the like of the user terminal 10a are registered.

Note that the CSCF 30 includes a P (Proxy)-CSCF, an S (Serving)-CSCF, an I (interrogating)-CSCF or the like. Here, the P (Proxy)-CSCF is firstly contacted when the user terminal 10a and the user terminal 10b start communication. The S (Serving)-CSCF controls initiation and termination of a session. The I (Interrogating)-CSCF allocates the S-CSCF when the user terminal 10a and the user terminal 10b start communication. In the present embodiment, the P-CSCF, S-CSCF, and I-CSCF are collectively called as the CSCF 30 to make the description simple.

The VCC 40 has an application (Voice Call Continuity Application) for switching the C-PLANE. Here, the C-PLANE is a path for control information such as call control information, used when the network domain to which the user terminal 10a is connected is switched. Specifically, when the user terminal 10a is connected to the CS domain 200, the VCC 40 establishes a session 1 between the VCC 40 and the user terminal 10b, and also establishes the session 2 between the VCC 40 and the MGCF 220. On the other hand, when the user terminal 10a is connected to the WLAN domain 100, the VCC 40 establishes the session 1 between the VCC 40 and the user terminal 10b, and establishes the session 3 between the VCC 40 and the user terminal 10a.

In this way, the VCC 40 establishes the session 1 between the VCC 40 and the user terminal 10b, independent of the network domain to which the user terminal 10a is connected. In other words, even when the network domain to which the user terminal 10a is connected is switched, the VCC 40 does not switch the session 1 on the user terminal 10b side, but switches only the session on the user terminal 10a side (namely, the session 2 or the session 3).

An IASA 50 is an apparatus (Inter Access System Anchor) that switches the U-PLANE. Here, the U-PLANE is a path for user communication information such as voice information or data information, used when the network domain to which the user terminal 10a is connected is switched. In other words, the IASA 50 terminates user communication information received from the user terminal 10b side, and then transmits the user communication information to the user terminal 10a side.

To be more specific, when the user terminal 10a is connected to the CS domain 200, the IASA 50 terminates user communication information received from the user terminal 10b side, and then transmits the user communication information to the MGW 230. On the other hand, when the user terminal 10a is connected to the WLAN domain 100, the IASA 50 terminates user communication information received from the user terminal 10b side, and then transmits the user communication information to the user terminal 10a.

Here, destination information of the user communication information transmitted from the user terminal 10b is not the host address used in the network domain, but a routing address for identifying the U-PLANE between the user terminal 10b and the IASA 50 (for example, an IP address of the IASA 50). Here, it should be noted that the IP address of the IASA 50, being taken as an example of the routing address, is dynamically allocated depending on the establishments for the U-PLANE.

Accordingly, "terminating user communication information received from the user terminal 10b" means to receive user communication information having a routing address as destination information, and to rewrite the destination information of the user communication information to replace the routing address with a host address.

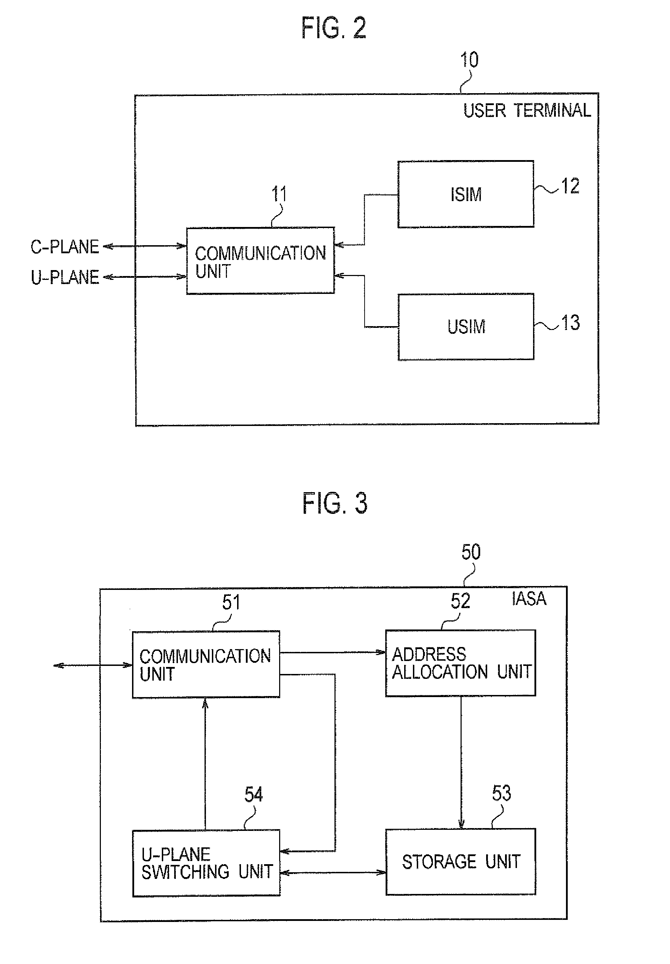

Further, when the user terminal 10a is connected to the CS domain 200, the IASA 50 stores the routing address and the CS host address in association with each other. On the other hand, when the user terminal 10a is connected to the WLAN domain 100, the IASA 50 stores the routing address and the WLAN host address in association with each other. The IASA 50 will be described in detail later (refer to Fig. 3).

### (Configuration of User terminal)

With reference to the drawing, a description will be given below of the configuration of the user terminal according to the embodiment of the present invention. Fig. 2 is a block diagram showing the configuration of the user terminal 10 according to the embodiment of the present invention.

As shown in Fig. 2, the user terminal 10 includes a communication unit 11, an ISIM 12, and a USIM 13. It should be noted that in the user terminal 10 shown in Fig. 2, some of the configurations (for example, a modulation processing unit, a coding processing unit, and a baseband processing unit) included to perform a radio communication are omitted.

The communication unit 11 performs radio communications with the access point included in the WLAN domain 100 or with the base station included in the CS domain 200. Further, the communication unit 11 transmits the control information such as call control information through the C-PLANE, and transmits the user communication information such as voice information and data information through the U-PLANE.

The ISIM 12 is a module (IP Multimedia Services Identity Module) performing various processing when the user terminal 10 performs the communication through the WLAN domain 100. Specifically, the ISIM 12 manages, for example, identification information (IP address) needed when the user terminal 10 performs the communication through the WLAN domain 100, and uses the identification information to perform the various processing.

The USIM 13 is a module (Universal Subscriber Identity Module) performing various processing when the user terminal 10 performs the communication through the CS domain 200. Specifically, the USIM 13 manages, for example, subscriber information needed when the user terminal 10 performs the communication through the CS domain 200, and uses the subscriber information to perform the various processing.

### (Configuration of IASA)

With reference to the drawing, a description will be given below of the configuration of the IASA according to the embodiment of the present invention. Fig. 3 is a block diagram showing the configuration of the IASA 50 according to the embodiment of the present invention.

As shown in Fig. 3, the IASA 50 includes a communication unit 51, an address allocation unit 52, a storage unit 53, a controlling unit 54, and a U-PLANE switching unit 55. Note that the IASA 50 is provided on the U-PLANE, which is a path used to transmit and receive the user communication information between the user terminal 10a and the user terminal 10b.

The communication unit 51 receives the user communication information transmitted from the user terminal 10b. Note that the destination information of the user communication information transmitted from the user terminal 10b is a routing address (for example, an IP address of the IASA 50), as mentioned above.

Subsequently, in accordance with an instruction from the U-PLANE switching unit 55, the communication unit 51 rewrites the destination information of the user communication information, and transmits the user communication information having the destination information rewritten.

For example, when the user terminal 10a is connected to the WLAN domain 100, the destination information of the user communication information transmitted from the user terminal 10b is rewritten from a routing address to a WLAN host address (for example, an IP address of the user terminal 10a). On the other hand, when the user terminal 10a is connected to the CS domain 200, the destination information of the user communication information transmitted from the user terminal 10b to the user terminal 10a is rewritten from a routing address to a CS host address (for example, an IP address of the MGW 230).

The communication unit 51 receives, from the subscriber server 240, a message (HAR; Home Agent MIP Request) requesting to allocate the destination information of the user communication information to be used in the network domain to which the user terminal 10a is connected. Moreover, the communication unit 51 receives, from the CSCF 30, an allocation request requesting to allocate a routing address (for example, an IP address of the IASA 50).

Further, the communication unit 51 receives, from the CSCF 30, a switching instruction. Here, the switching instruction is an instruction that instructs a switch from the U-PLANE connected through the WLAN domain 100 to the U-PLANE connected through the CS domain 200, or an instruction that instructs a switch from the U-PLANE connected through the CS domain 200 to the U-PLANE connected through the WLAN domain 100.

In response to the message (HAR; Home Agent MIP Request), the address allocation unit 52 allocates, to the user terminal 10a, a host address used in the network domain.

Further, in response to the allocation request, the address allocation unit 52 allocates a routing address (for example, an IP address of the IASA 50) to the U-PLANE established between the user terminal 10b and the IASA 50.

Furthermore, the address allocation unit 52 stores the routing address and the host address in association with each other, in the storage unit 53 (NAT (Network Address Translation) processing).

To be more specific, when the user terminal 10a is connected to the CS domain 200, the address allocation unit 52 allocates a CS host address (for example, an IP address of the MGW 230), and then stores the CS host address in association with the routing address in the storage unit 53.

On the other hand, when the user terminal 10a is connected to the WLAN domain 100, the address allocation unit 52 allocates a WLAN host address (for example, an IP address of the user terminal 10a), and then stores the WLAN host address in association with the routing address in the storage unit 53.

The storage unit 53 stores a terminal ID, a routing address, a host address, a service type, and a connection status in association with each other.

As the "terminal ID," an ID identifying the user terminal 10a (for example, a telephone number) is stored.

As the "routing address," a routing address used as the destination information between the user terminal 10b and the IASA 50 (for example, an IP address of the IASA 50), is stored.

As the "host address," a host address, which is used as the destination information in the network domain to which the user terminal 10a is connected, is stored. In this regard, as mentioned above, the host address is a CS host address (for example, an IP address of the MGW 230) when the user terminal 10a is connected to the CS domain 200. On the other hand, the host address is a WLAN host address (for example, an IP address of the user terminal 10a) when the user terminal 10a is connected to the WLAN domain 100.

Note that the above-described routing address may be identical to the host address of data information.

As the "service type," information indicating a type of the user communication information transmitted from the user terminal 10b is stored. For example, as the "service type," information indicating whether the user communication information is the voice information or the data information is stored.

Note that the "service type" may be the information such as: a protocol ID identifying a protocol (such as RTP (Real-time Transport Protocol) and HTTP (Hyper Text Transfer Protocol)) used for communication performed between the user terminal 10a and the user terminal 10b; and a port number set upon the initiation of the communication performed between the user terminal 10a and the user terminal 10b.

As the "connection status," information indicating a host address activated as the destination information of the user communication information transmitted from the user terminal 10b. The connection status is indicated for every type (service type) of the user communication information transmitted from the user terminal 10b. For example, "o" is stored as the "connection status" when a host address is activated as the destination information of the user communication information. On the other hand, "x" is stored as the "connection status" when a host address is not activated as the destination information of the user communication information.

When the switching instruction is received from the CSCF 30, the U-PLANE switching unit 55 refers to the "service type" stored in the storage unit 53 to acquire a type of the user communication information transmitted from the user terminal 10b. Then, based on the type of the user communication information acquired from the storage unit 53, the U-PLANE switching unit 55 determines whether the destination information of the user communication information needs to be changed or not.

To be more precise, the U-PLANE switching unit 55 determines that the destination information needs to be changed, when the type of the user communication information is voice information. On the other hand, the U-PLANE switching unit 55 determines that the destination information does not need to be changed, when the type of the user communication information is data information.

Subsequently, when the destination information is determined to be changed, the U-PLANE switching unit 55 updates the "connection status" stored in the storage unit 53, in accordance with the network domain instructed by the switching instruction.

Specifically, when the switching instruction instructs the switch from the U-PLANE connected through the WLAN domain 100 to the U-PLANE connected through the CS domain 200, the U-PLANE switching unit 55 updates the "connection status" corresponding to the CS domain 200 from "×" to "o." On the other hand, when the switching instruction instructs the switch from the U-PLANE connected through the CS domain 200 to the U-PLANE connected through the WLAN domain 100, the U-PLANE switching unit 55 updates the "connection status" corresponding to the WLAN domain 100 from "×" to "○."

Moreover, when the user communication information transmitted from the user terminal 10b is received, the U-PLANE switching unit 55 refers to the "connection status" stored in the storage unit 53, and instructs the communication unit 51 to rewrite the destination information of the user communication information transmitted to the user terminal 10a.

Specifically, the U-PLANE switching unit 55 acquires a host address from the storage unit 53. Here, the host address is associated with the destination information (routing address) of the user communication information received from the user terminal 10b. The U-PLANE switching unit 55 acquires a host address having a connection status of "o," based on the type (service type) of the user communication information. Further, the U-PLANE switching unit 55 instructs the communication unit 51 to rewrite the destination address so as to replace the routing address with the acquired host address.

It is to be noted that the routing address and the host address may be the same when the user communication information is data information as described above. Therefore, it goes without saying that the destination information does not need to be rewritten in such a case.

### (Operation of Communication System)

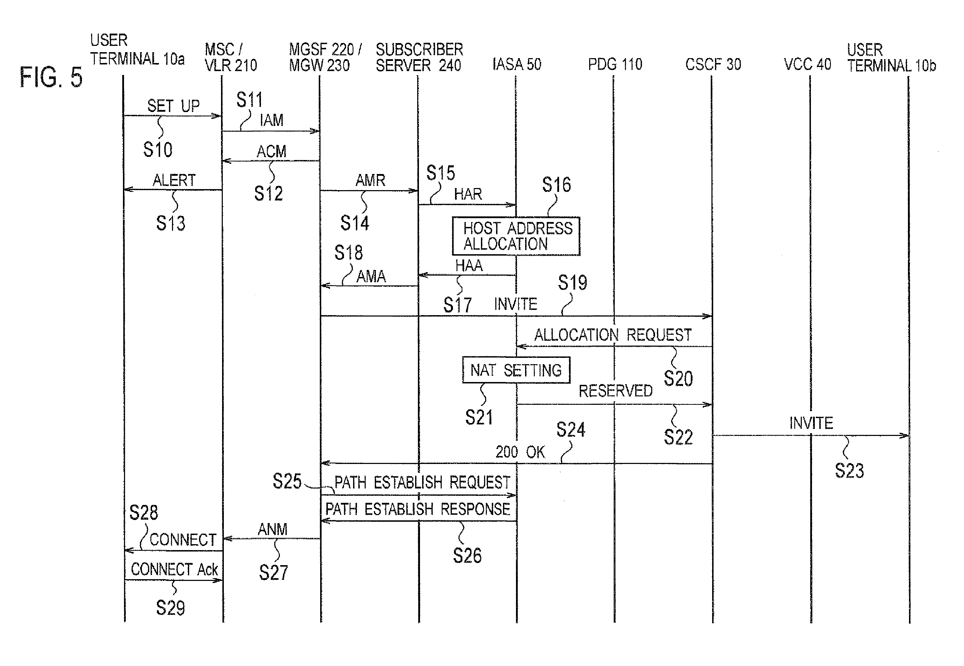

With reference to the drawings, descriptions will be given below of the operations of the communication system according to the embodiment of the present invention. Figs. 5 to 10 are sequence diagrams each showing the operation of the communication system according to the embodiment of the present invention.

With reference to Fig. 5, a description will be firstly given of the operation of the communication system, performed when the user terminal 10a is connected to the CS domain 200.

As shown in Fig. 5, in Step 10, the user terminal 10a transmits, to the MSCNLR 210, a connection request (SET UP) requesting to initiate the communication between the user terminal 10a and the user terminal 10b.

In Step 11, the MSC/VLR 210 transmits, to the MGCF 220/MGW 230, a message (IAM; Initial Address Message) that requests an allocation of a host address for the user terminal 10a.

In Step 12, the MGCF 220/mew 230 transmits, to the MSC/VLR 210, a message (ACM; Address Complete Message) indicating that the IAM is received.

In Step 13, the MSC/VLR 210 transmits a message (Alert), to the user terminal 10a, the message indicating that the connection request (SET UP) has been received.

In Step 14, the MGCF 220/MGW 230 transmits, to the subscriber server 240, an authentication request (AMR; Authentication-Authorization Mobile-node Request) for requesting an authentication of the user terminal 10a.

In Step 15, after the subscriber server 240 authenticates the user terminal 10, the subscriber 240 selects the IASA 50 to be allocated to a path (U-PLANE) used for transmitting and receiving the user communication information between the user terminal 10a and the user terminal 10b. Here, the IASA 50 is selected in accordance with the location information of the user terminal 10a and/or a service type requested by the user terminal 10a. Further, the subscriber server 240 transmits, to the selected IASA 50, a message (HAR; Home Agent MIP Request) that requests an allocation of a CS host address.

In Step 16, the IASA 50 allocates the CS host address to the user terminal 10a, and stores the allocated CS host address in the storage unit 53 along with the terminal ID (for example, a telephone number of the user terminal 10a).

In Step 17, the IASA 50 transmits, to the subscriber server 240, a message (HAA; Home Agent MIP Answer) including the CS host address allocated to the user terminal 10a.

Incidentally, the subscriber server 240 stores an IP address of the IASA 50 and the CS host address of the user terminal 10a in association with each other. It should be noted that the IP address of the IASA 50 is an address used by the MGCF 220/MGW 230 to specify the IASA 50, and is different from the routing address.

In Step 18, the subscriber server 240 transmits, to the MGCF 220/MGW 230, a message (AMA; Authentication-Authorization Mobile-node Answer) including the IP address of the IASA 50 selected in Step 15.

In Step 19, the MGCF 220/MGW 230 transmits a message (INVITE) to the CSCF 30 by using the CS host address of the user terminal 10a as source information, the message requesting to call the user terminal 10b.

In Step 20, the CSCF 30 transmits, a message (Allocation Request) by using the CS host address of the user terminal 10a as source information, the message requesting allocation of a routing address.

In Step 21, the IASA 50 allocates a routing address to the U-PLANE to be established between the user terminal 10b and the IASA50. Then, the IASA 50 stores the CS host address of the user terminal 10a and the routing address in association with each other (NAT (Network Address Translation) processing).

In Step 22, the IASA 50 transmits a message (Reserved) to the CSCF 30 by using the routing address as source information, the message indicating that the routing address has been allocated.

In Step 23, the CSCF 30 transmits a message (INVITE) to the user terminal 10b by using the routing address as source information, the message requesting to call the user terminal 10b. When transmitting the user communication information to the user terminal 10a, the user terminal 10b uses the routing address as destination information of the user communication information.

In Step 24, the CSCF 30 transmits, to the MGCF 220/MGW 230, a message (200OK) indicating that the user terminal 10a is being called.

In Step 25, the MGCF 220/MGW 230 transmits, to the IASA 50, a message (Path Establish Request) requesting an establishment of the U-PLANE, which is a path used for transmitting and receiving the user communication information between the user terminal 10a and the IASA 50.

In Step 26, after the IASA 50 establishes the U-PLANE, which is the path used for transmitting and receiving the user communication information between the user terminal 10a and the IASA 50, the IASA 50 transmits, to the MGCF 220/MGW 230, a message (Path Establish Request) indicating that the U-PLANE has been established.

In Step 27, the MGCF 220/MGW 230 transmits, to the MSC/VLR 210, a message (ANM; Answer Message) indicating a completion of the establishment of the U-PLANE, which is the path used for transmitting and receiving the user communication information between the user terminal 10a and the IASA 50.

In Step 28, the MSC/VLR 210 transmits, to the user terminal 10a, a message (Connect) indicating the completion of the establishment of the U-PLANE, which is the path used for transmitting and receiving the user communication information between the user terminal 10a and the IASA 50 (user terminal 10b).

In Step 29, the user terminal 10a transmits, to the MSC/VLR 210, a reception acknowledgement (Connect Ack) for the message (Connect). Here, the reception acknowledgement (Connect Ack) indicates that the establishment of the U-PLANE is completed.

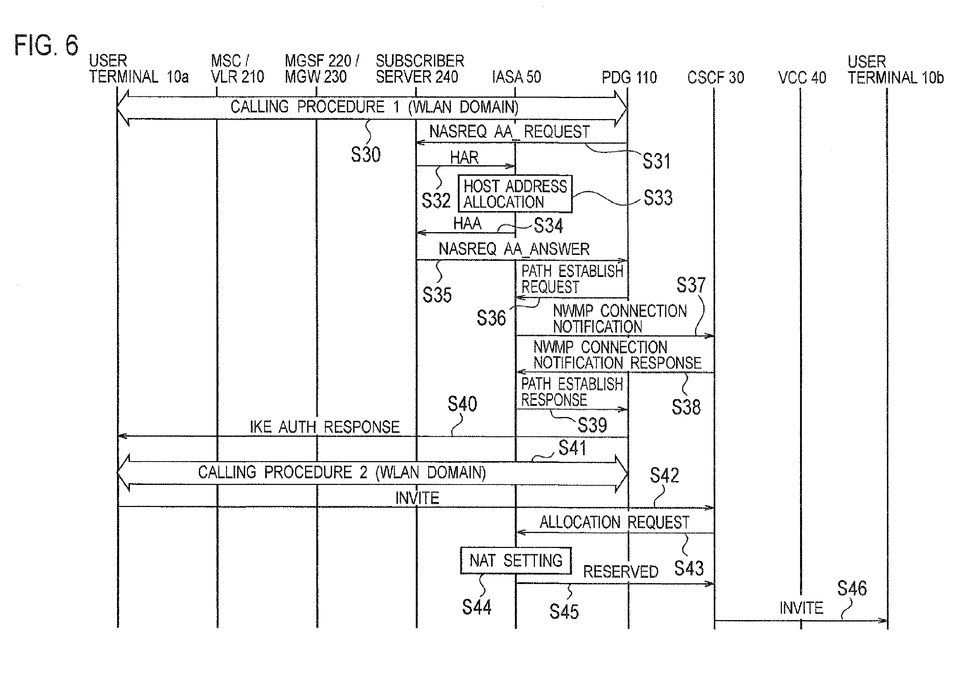

Next, with reference to Fig. 6, a description will be given of the operation of the communication system, performed when the user terminal 10a is connected to the WLAN domain 100.

As shown in Fig. 6, in Step 30, the user terminal 10a performs a calling procedure 1 to initiate a communication between the user terminal 10a and the user terminal 10b. Specifically, the user terminal 10a requests an ARF (not shown) to select the PDG 110 to which the user terminal 10a should be connected, in accordance with the location information of the user terminal 10a. Then, the user terminal 10a acquires an IP address of the PDG 110 to which the user terminal 10a should be connected. Subsequently, the user terminal 10a transmits, to the PDG 110, messages (such as IKE_SA_INIT_Request and IKE_Auth_Request) for performing processes such as an encryption processing and an authentication processing. Further, the PDG 110 requests the subscriber server 240 to perform the authentication of the user terminal 10a. Then, the subscriber server 240 authenticates the user terminal 10a.

In addition, in the processing performed in Step 30, an IPsec tunnel is formed between the user terminal 10a and the PDG 110.

In Step 31, the PDG 110 transmits, to the subscriber server 240, a message (NASREQ (Network Access Node Requirement) AA (Authentication Authorization)-Request) requesting to perform an authentication to check whether or not the user terminal 10a satisfies conditions required in the WLAN domain network 100.

In Step 32, after the subscriber server 240 authenticates that the user terminal 10a satisfies the conditions required in the WLAN domain network 100, the subscriber server 240 selects an IASA 50 to be allocated to the path (U-PLANE) used for transmitting and receiving the user communication information between the user terminal 10a and the user terminal 10b. Here, the IASA 50 is selected in accordance with the location information of the user terminal 10a and/or a service type requested by the user terminal 10a. Further, the subscriber server 240 transmits, to the selected IASA 50, a message (HAR; Home Agent MIP Request) that requests an allocation of a WLAN host address.

In Step 33, the IASA 50 allocates the WLAN host address to the user terminal 10a, and stores the allocated WLAN host address in the storage unit 53 along with a terminal ID (for example, a telephone number of the user terminal 10a).

In Step 34, the IASA 50 transmits, to the subscriber server 240, a message (HAA; Home Agent MIP Answer) including the WLAN host address allocated to the user terminal 10a.

Incidentally, the subscriber server 240 stores an IP address of the IASA 50 and the WLAN host address of the user terminal 10a in association with each other. It should be noted that the IP address of the IASA 50 is an address used by the PDG 110 to specify the IASA 50, and is different from the routing address.

In Step 35, the subscriber server 240 transmits, to the PDG 110, a message (NASREQ (Network Access node Requirement) AA (Authentication Authorization)-Answer) t indicating that the user terminal 10a satisfies the conditions required in the WLAN domain 100. Note that the message includes the WLAN host address of the user terminal 10a and the IP address of the IASA 50.

In Step 36, the PDG 110 transmits, to the IASA 50, a message (Path Establish Request) requesting an establishment of the U-PLANE, which is a path used for transmitting and receiving the user communication information between the user terminal 10a and the IASA 50.

In Step 37, the IASA 50 transmits, to the CSCF 30, a message (NWMP Connection Notification) indicating that the connection of the U-PLANE, which is a path used for transmitting and receiving the user communication information between the user terminal 10a and the IASA 50, has been verified according to the network management protocol.

In Step 38, the CSCF 30 transmits, to the IASA 50, a reception acknowledgement (NWMP Connection Notification Response) for the message (NWMP Connection Notification).

In Step 39, after the IASA 50 establishes the U-PLANE , which is a path used for transmitting and receiving the user communication information between the user terminal 10a and the IASA 50, the IASA 50 transmits, to the PDG 110, a message (Path Establish Request) indicating that the U-PLANE has been established.

In Step 40, the PDG 110 transmits, to the user terminal 10a, a message (IKE Auth Response) indicating that the user terminal 10a has been authenticated. Note that the message (IKE Auth Response) includes the WLAN host address of the user terminal 10a.

In Step 41, the user terminal 10a performs a calling procedure 2 to initiate a communication between the user terminal 10a and the user terminal 10b. Specifically, the user terminal 10a performs processes such as a process (Registration) for registering an IP address in the CSCF 30, the IP address being controlled by the ISIM 12.

In Step 42, the user terminal 10a transmits a message (INVITE) to the CSCF 30 by using the WLAN host address as source information, the message requesting to call the user terminal 10b.

In Step 43, the CSCF 30 transmits a message (Allocation Request) to the IASA 50 by using the WLAN host address of the user terminal 10a as source information, the message requesting an allocation of a routing address.

In Step 44, the IASA 50 allocates a routing address to the U-PLANE to be established between the user terminal 10b and the IASA 50. Then, the IASA 50 stores the WLAN host address and the routing address in association with each other.

In Step 45, the IASA 50 transmits a message (Reserved) to the CSCF 30 by using the routing address as source information, the message indicating that the routing address has been allocated.

In Step 46, the CSCF 30 transmits a message (INVITE) to the user terminal 10b by using the routing address as source information, the message requesting to call the user terminal 10b. When transmitting the user communication information to the user terminal 10a, the user terminal 10b uses the routing address as the destination information of the user communication information.

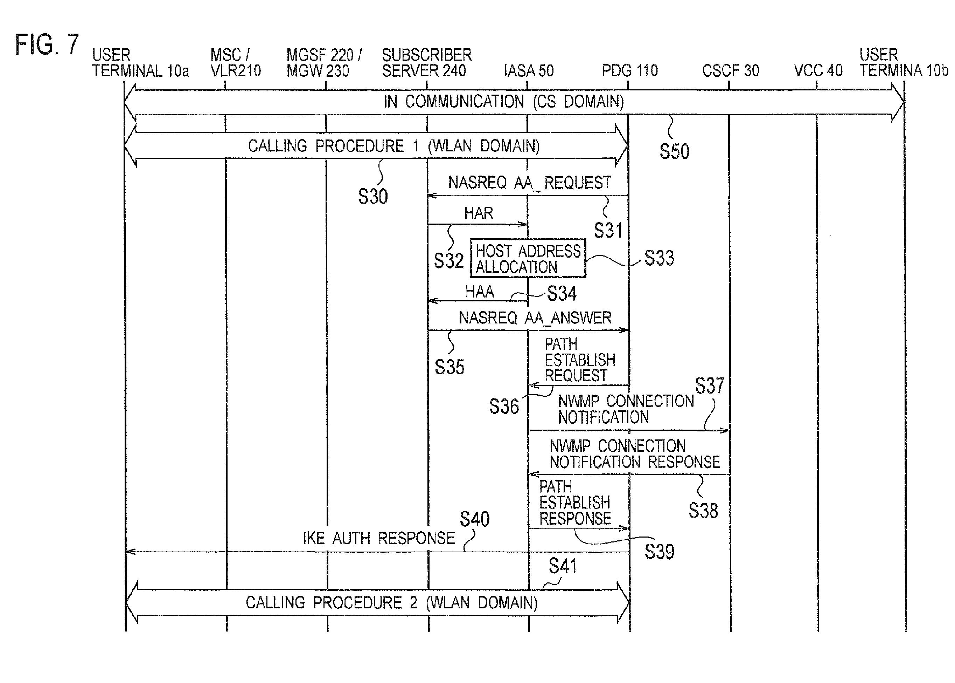

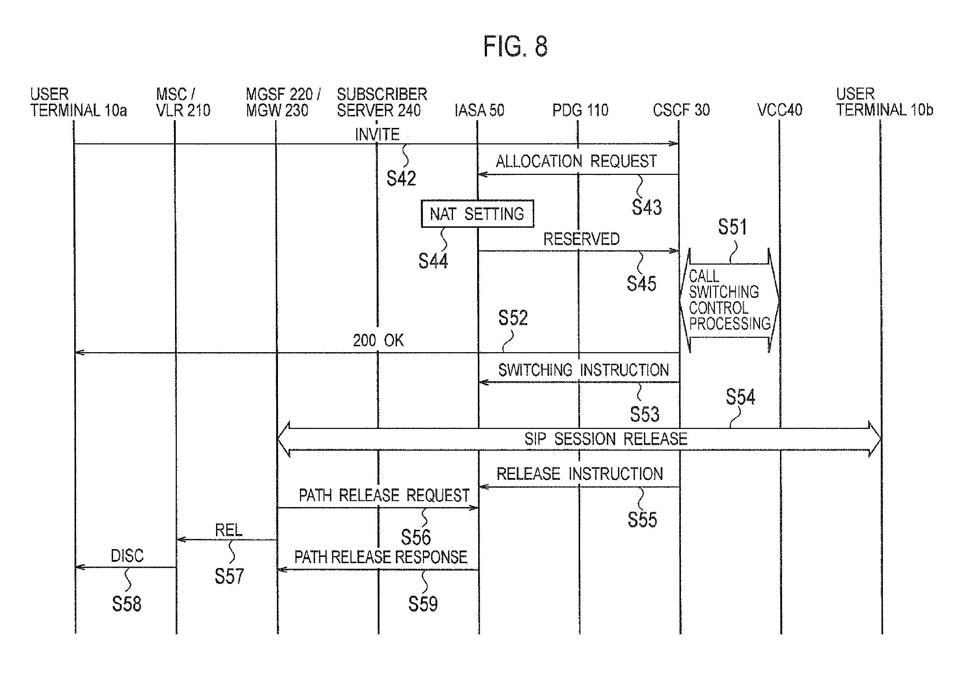

Next, with reference to Figs. 7 and 8, a description will be given of the operation of the communication system, performed when the network domain to which the user terminal 1 0a is connected is switched from the CS domain 200 to the WLAN domain 100. Note that, in Figs. 7 and 8, the same processings as those in Fig. 6 described above are assigned the same step numbers.

As shown in Figs. 7 and 8, in Step 50, the user terminal 10a performs a communication with the user terminal 10b through the CS domain 200.

In Steps 30 to 45, the user terminal 10a performs a procedure to be connected to the WLAN domain 100, for switching the network domain to which the user terminal 10a is connected from the CS domain 200 to the WLAN domain 100.

Note that, in Step 44, although the IASA 50 already stores a routing address and a CS host address in association with each other, the IASA 50 newly stores a routing address and a WLAN host address in associating with each other.

In Step 51, the VCC 40 performs a call control switching processing. Specifically, as shown in Fig. 1, the VCC 40 does not change the session 1, but performs a switching from the session 2 to the session 3 (C-PLANE switching processing).

In Step 52, the CSCF 30 transmits, to the user terminal 10a, a message (200 OK) indicating that the network domain to which the user terminal 10a is connected is currently being switched.

In Step 53, the CSCF 30 transmits, to the IASA 50, a switching instruction for activating the U-PLANE established between the user terminal 10a and the IASA 50 in the WLAN domain 100.

Here, the IASA 50 refers to the "(service type" stored in the storage unit 53 and acquires a type of the user communication information transmitted from the user terminal 10b. Then, based on the type of the user communication information acquired from the storage unit 53, the IASA 50 determines whether the destination information of the user communication information needs to be changed or not.

Subsequently, when the destination information is determined to be changed, the IASA 50 updates the "connection status" stored in the storage unit 53, and switches the activated host address from a CS host address to a WLAN host address.

In Step 54, an SIP session (C-PLANE) established in the CS domain 200 is released.

In Step 55, the CSCF 30 transmits, to the IASA 50, a release instruction that releases the U-PLANE, which is established between the user terminal 10a and the IASA 50 in the CS domain 200.

In Step 56, the MGCF 220/MGW 230 transmits, to the IASA 50, a message (Path Release Request) that requests the release of the U-PLANE, which is established between the user terminal 10a and the IASA 50 in the CS domain 200.

In Step 57, the MGCF 220/MGW 230 transmits, to the MSC/VLR 210, a message (REL) that requests the release of the U-PLANE, which is established between the user terminal 10a and the IASA 50 in the CS domain 200.

In Step 58, the MSC/VLR 210 transmits, to the user terminal 10a, a message (DISC) indicating that the U-PLANE, which is established between the user terminal 10a and the IASA 50 in the CS domain 200, has been disconnected.

In Step 59, the IASA 50 transmits, to the MGCF 220/mew 230, a message (Path Release Response) indicating that the U-PLANE, which is established between the user terminal 10a and the IASA 50 in the CS domain 200, has been released.

In this way, even when the network domain to which the user terminal 10a is connected is switched from the CS domain 200 to the WLAN domain 100, the network domain to which the user terminal 10a is connected can be switched without involving the user terminal 10b. This is because the user terminal 10b uses the routing address as the destination information of the user communication information.

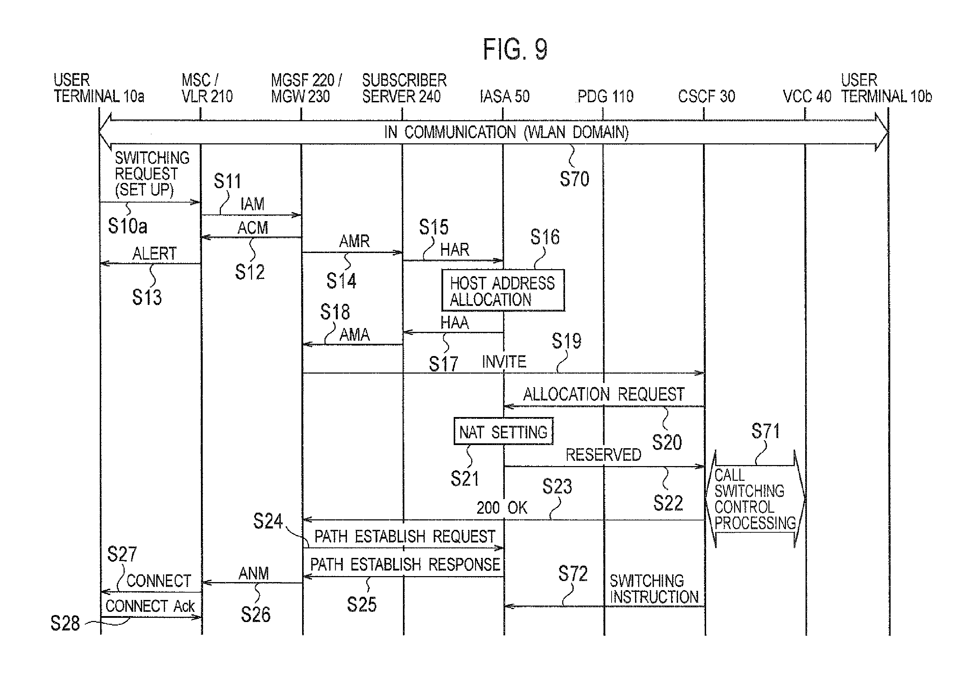

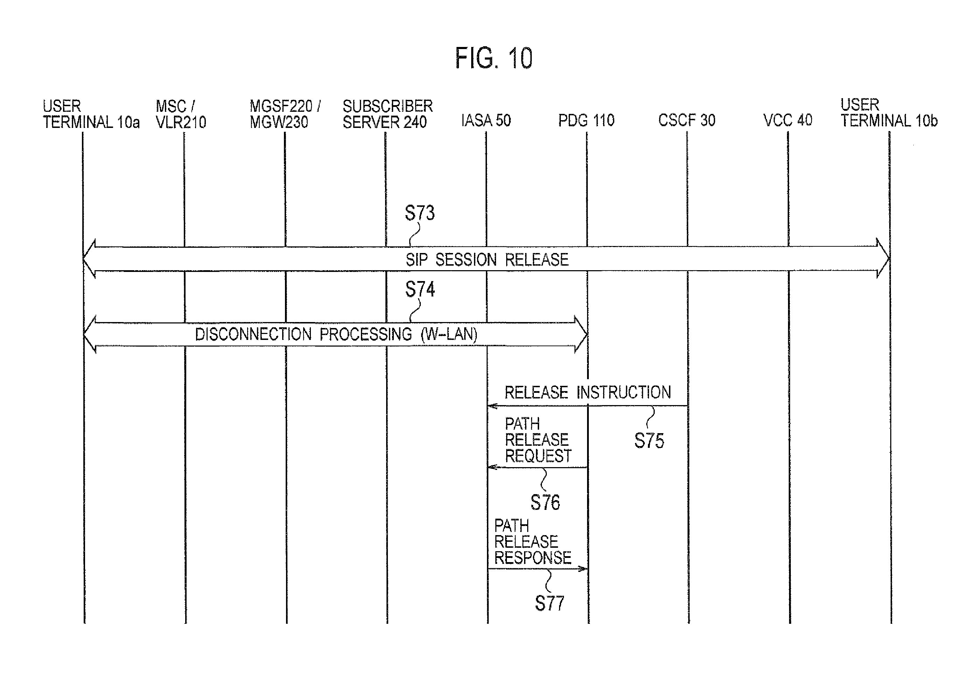

Lastly, with reference to Figs. 9 and 10, a description will be given of the operation of the communication system, performed when the network domain to which the user terminal 10a is connected is switched from the WLAN domain 100 to the CS domain 200. Note that, in Figs. 9 and 10, the same processings as those in Fig. 5 described above are assigned the same step numbers.

As shown in Figs. 9 and 10, in Step 70, the user terminal 10a performs a communication with the user terminal 10b through the WLAN domain 100.

In Steps 10a to 28, the user terminal 10a performs a procedure to be connected to the CS domain 200, for switching the network domain to which the user terminal 10a is connected from the WLAN domain 100 to the CS domain 200.

In Step 10a, unlike Step 10 shown in Fig. 5, the user terminal 10a transmits, to the MSC/VLR 210, a switching request (SET UP) including a switching number for identifying a communication between the user terminal 10a and the user terminal 10b. Here, as the switching number, a terminal ID, a call control number, or the like of the user terminal 10a or the user terminal 10b can be used.

In Step 21, although the IASA 50 already stores a routing address and a WLAN host address in association with each other, the IASA 50 newly stores a routing address and a CS host address in association with each other.

In Step 71, the VCC 40 performs call control switching processing. Specifically, as shown in Fig. 1, the VCC 40 does not change the session 1, but performs a switching from the session 3 to the session 2 (C-PLANE switching processing).

In Step 72, the CSCF 30 transmits, to the IASA 50, a switching instruction for activating the U-PLANE established between the user terminal 10a and the IASA 50 in the CS domain 200.

Here, the IASA 50 refers to the "service type" stored in the storage unit 50 and acquires a type of the user communication information transmitted from the user terminal 10b. Then, based on the type of the user communication information acquired from the storage unit 53, the IASA 50 determines whether the destination information of the user communication information needs to be changed or not.

Subsequently, when the destination information is determined to be changed, the IASA 50 updates the "connection status" stored in the storage unit 53, and switches the activated host address from a WLAN host address to a CS host address.

In Step 73, an SIP session (C-PLANE) established in the WLAN domain 100 is released.

In Step 74, the radio connection established between the user terminal 10a and the PDG 110 is disconnected.

In Step 75, the CSCF 30 transmits, to the IASA 50, a release instruction that releases the U-PLANE, which is established between the user terminal 10a and the IASA 50 in the WLAN domain 100.

In Step 76, the PDG 110 transmits, to the IASA 50, a message (Path Release Request) that requests the release of the U-PLANE, which is established between the user terminal 10a and the IASA 50 in the WLAN domain 100.

In Step 77, the IASA 50 transmits, to the PDG 110, a message (Path Release Response) that indicates the U-PLANE established in the WLAN domain 100 has been released.

In this way, even when the network domain to which the user terminal 10a is connected is switched from the WLAN domain 100 to the CS domain 200, the network domain to which the user terminal 10a is connected can be switched without involving the user terminal 10b. This is because the user terminal 10b uses the routing address as the destination information of the user communication information.

Incidentally, in Figs. 5 to 10, the descriptions have been given of a case where the user terminal 10a has been authenticated (that is, a case where authentication has been successful). However, the present invention is not limited to this. Specifically, it goes without saying that each apparatus may be notified of an authentication failure when the user terminal 10a has not been authenticated (that is, when the authentication has failed),.

### (Operations and Effects)

According to the IASA 50 of the embodiment of the present invention, the IASA 50 allocates a routing address identifying the U-PLANE to the U-PLANE, and the user terminal 10b uses the routing address as destination information to transmit user communication information. Accordingly, even when the network domain to which the user terminal 10a is connected is switched, it is no longer necessary to notify the user terminal 10b of a host address used as the destination information in the network domain to which the user terminal 10a is to be connected. Therefore, the time taken to switch the network domain to which the user terminal 10a is connected can be reduced, and the "Location Privacy" can be ensured.

In other words, a host address of the user terminal 10a does not need to be notified to the user terminal 10b, and thereby the user terminal 10b is not involved in the control of switching the network domain to which the one user terminal is connected. Accordingly, the time taken to switch the network domain to which the user terminal 10a is connected can be reduced, and the "Location Privacy" can be ensured.

To be more specific, the IASA 50 stores the routing address and the host address in association with each other. Then, when the IASA 50 receives the user communication information using the routing address as the destination information, the IASA 50 rewrites the destination information to replace the routing address with a host address, and transmits the user communication information to the user terminal 10a.

Accordingly, even when the network domain to which the user terminal 10a is connected is switched, the user terminal 10b does not need to be notified of a host address of the user terminal 10a, thereby reducing the time taken to switch the network domain to which the user terminal 10a is connected.

Further, since the user terminal 10b does not need to be notified of a host address of the user terminal 10a, the user terminal 10b cannot infer the location of the user terminal 10a based on the host address. In other words, the location of the user terminal 10a or the like can be kept confidential.

### (Other Embodiments)

The present invention have been disclosed as described above using the embodiment; however, it should not be understood that the descriptions and the drawings that constitute part of the disclosure are intended to limit the present invention. Various alternative embodiments will be apparent to those skilled in the art from the disclosure.

For example, although not particularly described in the above-described embodiment, the area in which the user terminal 10a is located may be a home area or a visiting area. Note that, when the user terminal 10a is located in a visiting area, it is preferable that an apparatus (for example, vPCRF) included in the visiting area allocates the routing address, and that an apparatus (for example, vPCRF) included in the home area allocates the host address.

In addition, although the WLAN domain 100 and the CS domain 200 have been taken as examples of the network domain in the above-described embodiment, the embodiment of the present invention is applicable to second network domains each having a different host address.

Additionally, although not particularly described in the above-described embodiment, in a case of a multi-call in which voice information communication and data information communication are carried out simultaneously as communications of the user communication information, multiple IASAs 50 may be provided in accordance with the types of the services.

In this case, the IASA 50 corresponding to the voice information communication rewrites the routing address to the host address of the network domain to which the user terminal 10a is to be connected, and then transmits the user communication information (voice information) transmitted from the user terminal 10b. On the other hand, the IASA 50 corresponding to the data information transmits the user communication information (data information) transmitted from the user terminal 10b, without rewriting to replace a routing address with a host address of the network domain to which the user terminal 10a is to be connected.

Furthermore, although not particularly described in the above-described embodiment, the IASA 50 may perform the U-PLANE switching control over three or more network domains each having a different host address.

In addition, in the above-described embodiment, the IASA 50 allocates a routing address, triggered by the SIP message (INVITE); however, the present invention is not limited to this. For example, when the user communication information is the data information, the IASA 50 may allocate the routing address, triggered by a message (PDP Context Activation) requesting activation of a PDP context.

Further, in the above-described embodiment, the routing address is notified to the user terminal 10b by being used as the source information of the SIP message (INVITE). However, the present invention is not limited to this, and the routing address may be notified by other messages.

### INDUSTRIAL APPLICABILITY

The present invention can provide a communication control method and a communication control apparatus, which are can reduce time taken to switch a network domain to which a user terminal is connected, and can ensure the "Location Privacy."

## Claims

1. A communication control method that switches a communication path of user communication information, in a communication system which performs a communication of the user communication information between one user terminal and other user terminal, the communication system including a plurality of network domains each having different types of destination information of the user communication information transmitted from the other user terminal to the one user terminal, the communication control method comprising:
allocating, to the communication path of the user communication information, path identification information identifying the communication path of the user communication information;
notifying, to the other user terminal, the path identification information; and
transmitting, from the other user terminal, the user communication information, by using the path identification information as the destination information.

2. The communication control method according to claim 1, further comprising:
associating the path identification information with first destination information, when the one user terminal is connected to first network domain, the first destination information being the destination information used in the first network domain;
determining, based on a type of the user communication information, whether the destination information needs to be changed, when the user communication information using the path identification information as the destination information is received from the other user terminal; and
transmitting the user communication information after changing the destination information from the path identification information to the first destination information, when the destination information is determined to be changed.

3. The communication control method according to claim 2, further comprising:
associating the path identification information with second destination information being the destination information used in the second network domain, when the network domain to which the one user terminal is connected is switched from the first network domain to an second network domain, the second destination information being the destination information used in the second network domain; and
transmitting the user communication information after changing the destination information from the path identification information to the second destination information, when the destination information is determined to be changed.

4. The communication control method according to any one of claims 2 and 3, further comprising:
receiving a switching instruction requesting to switch the communication path of the user communication information, wherein
whether the destination information needs to be changed is determined when the switching instruction is received.

5. A communication control apparatus provided on a communication path of user communication information, in a communication system which performs a communication of the user communication information between one user terminal and other user terminal, the communication system including a plurality of network domains each having different types of destination information of the user communication information transmitted from the other user terminal to the one user terminal, the communication control apparatus comprising:
an identification information allocation unit configured to allocate, to the communication path of the user communication information, path identification information identifying the communication path of the user communication information; and
a notification unit configured to notify, to the other user terminal, the path identification information allocated by the identification information allocation unit, wherein
the path identification information is used as the destination information, when the other user terminal transmits the user communication information.

6. The communication control apparatus according to claim 5, further comprising:
a storage unit configured to store the path identification information and first destination information in association with each other, when the one user terminal is connected to first network domain, the first destination information being the destination information used in the first network domain;
a determination unit configured to determine, based on a type of the user communication information, whether the destination information needs to be changed, when the user communication information using the path identification information as the destination information is received from the other user terminal; and
a transmitting unit configured to change the destination information from the path identification information to the first destination information, when the destination information is determined to be changed, and to transmit the user communication information.

7. The communication control apparatus according to claim 6, wherein
the storage unit stores the path identification information and second destination information in association with each other, when the network domain to which the one user terminal is connected is switched from the first network domain to an second network domain, the second destination information being the destination information used in the second network domain; and
the transmitting unit changes the destination information from the path identification information to the first destination information, when the destination information is determined to be changed, and transmits the user communication information.

8. The communication control apparatus according to any one of claims 6 and 7, further comprising:
a receiving unit configured to receive a switching instruction requesting to switch the communication path of the user communication information, wherein
whether the destination information needs to be changed is determined when the switching instruction is received.
